# EUROPEAN PATENT APPLICATION

(11) **EP 4 099 751 A1**
(43) Date of publication of application: **07.12.2022**
(21) Application number: 21765342.7
(22) Date of filing: 25.02.2021
(51) Int. Cl.: H04W 24/10, H04W 72/12, H04B 7/06, H04L 5/00, H04W 92/18, H04W 4/40

(54) **METHOD AND APPARATUS FOR REPORTING CHANNEL STATE INFORMATION FOR SIDELINK COMMUNICATION**

(30) Priority: 05.03.2020 US 202062985431 P; 09.02.2021 KR 20210018476
(71) Applicant: HYUNDAI MOTOR COMPANY, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: SON, Hyuk Min, Iksan-si, Jeollabuk-do 54653 (KR); HAHN, Gene Back, Hwaseong-si, Gyeonggi-do 18280 (KR)
(74) Representative: Isarpatent
(86) International application number: PCT/KR2021/002413
(87) International publication number: WO 2021/177662

(57) **Abstract**

Disclosed are a method and apparatus for reporting channel state information for sidelink communication. An operating method for a first terminal comprises the steps of: transmitting, to a second terminal, first step SCI including resource allocation information; transmitting, to the second terminal, second step SCI including CSI request information; and when the CSI request information indicates a request for a CSI report, receiving, from the second terminal, a message including SL CSI in a resource indicated by the resource allocation information.

## Description

### Technical Field

The present disclosure relates to a sidelink communication technique, and more particularly, to a technique of reporting channel state information for sidelink communication.

### Background Art

A fifth-generation (5G) communication system (e.g., New Radio (NR) communication system) which uses a frequency band higher than a frequency band of a fourth-generation (4G) communication system (e.g., Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g., C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g., C-V2X communications) may be performed based on sidelink communication technologies (e.g., Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g., periodic sidelink data) may be transmitted using the CG resources.

Meanwhile, sidelink communication may be performed based on a broadcast scheme, groupcast scheme, and/or unicast scheme. In particular, for sidelink communication based on the unicast scheme, channel state information between terminals is required.

### Summary

### Technical Problem

An objective of the present disclosure for solving the above-described problem is to provide a method and an apparatus of reporting channel state information for sidelink communication.

### Technical Solution

An operation method of a first terminal, according to a first exemplary embodiment of the present disclosure for achieving the objective, may comprise: transmitting sidelink control information (SCI) including channel state information (CSI) request information to a second terminal; transmitting a reference signal for sidelink (SL) communication between the first terminal and the second terminal to the second terminal; and when the CSI request information indicates a CSI report request, receiving a message including SL CSI from the second terminal in a SL resource allocated by the base station, wherein the SL CSI is generated based on the reference signal.

The SL CSI may be multiplexed with SL data in the SL resource.

When the CSI request information does not indicate the CSI report request, the SL resource may be used for transmitting and receiving SL data between the first terminal and the second terminal instead of the SL CSI.

The reference signal may be a CSI-reference signal (CSI-RS) or a demodulation reference signal (DMRS), and a higher layer message including information indicating a type of the reference signal may be received from the base station.

A resource for transmitting the reference signal may be configured by the base station.

The SL CSI may be received within a preconfigured period from a transmission time of the SCI, and a higher layer message including information indicating the preconfigured period may be received from the base station.

The SL CSI may include a channel quality indicator (CQI) and a rank indicator (RI), and the message may be a medium access control (MAC) control element (CE) including the CQI and the RI.

An operation method of a second terminal, according to a second exemplary embodiment of the present disclosure for achieving the objective, may comprise: receiving downlink control information (DCI) including resource allocation information from a base station; receiving sidelink control information (SCI) including channel state information (CSI) request information from a first terminal; and when the CSI request information indicates a CSI report request, transmitting a message including sidelink (SL) CSI in a SL resource indicated by the resource allocation information to the first terminal.

The SL CSI may be multiplexed with SL data in the SL resource.

The operation method may further comprise, when the CSI request information does not indicate the CSI report request, transmitting SL data to the first terminal in the SL resource.

The SL CSI may be measured based on a reference signal received from the first terminal.

The reference signal may be a CSI-reference signal (CSI-RS) or a demodulation reference signal (DMRS), and a higher layer message including information indicating a type of the reference signal may be received from the base station.

A resource for receiving the reference signal may be configured by the base station.

The message including the SL CSI may be transmitted within a preconfigured period from a reception time of the SCI, and a higher layer message including information indicating the preconfigured period may be received from the base station.

The SL CSI may include a channel quality indicator (CQI) and a rank indicator (RI), and the message may be a medium access control (MAC) control element (CE) including the CQI and the RI.

A second terminal according to a third exemplary embodiment of the present disclosure for achieving the objective may comprise: a processor; and a memory storing one or more instructions executable by the processor, wherein the one or more instructions cause the second terminal to: receive downlink control information (DCI) including resource allocation information from a base station; receive sidelink control information (SCI) including channel state information (CSI) request information from a first terminal; and when the CSI request information indicates a CSI report request, transmit a message including sidelink (SL) CSI in a SL resource indicated by the resource allocation information to the first terminal.

The SL CSI may be multiplexed with SL data in the SL resource.

The SL CSI may be measured based on a reference signal received from the first terminal, the reference signal may be a CSI-reference signal (CSI-RS) or a demodulation reference signal (DMRS), and a higher layer message including information indicating a type of the reference signal may be received from the base station.

The message including the SL CSI may be transmitted within a preconfigured period from a reception time of the SCI, and a higher layer message including information indicating the preconfigured period may be received from the base station.

The SL CSI may include a channel quality indicator (CQI) and a rank indicator (RI), and the message may be a medium access control (MAC) control element (CE) including the CQI and the RI.

### Advantageous Effects

According to the present disclosure, the transmitting terminal may transmit information required for SL CSI measurement to the receiving terminal. The receiving terminal may measure SL CSI based on the information received from the transmitting terminal, and may transmit the SL CSI to the transmitting terminal. The transmitting terminal may perform sidelink communication with the receiving terminal based on the SL CSI. Accordingly, the performance of sidelink communication can be improved.

### Description of Drawings

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a sequence chart illustrating a first exemplary embodiment of a method for reporting SL CSI.
FIG. 8 is a sequence chart illustrating a second exemplary embodiment of a method for reporting SL CSI.
FIG. 9 is a sequence chart illustrating a third exemplary embodiment of a method for reporting SL CSI.
FIG. 10 is a sequence chart illustrating a fourth exemplary embodiment of a method for reporting SL CSI.
FIG. 11 is a sequence chart illustrating a fifth exemplary embodiment of a method for reporting SL CSI.
FIG. 12 is a sequence chart illustrating a sixth exemplary embodiment of a method for reporting SL CSI.
FIG. 13 is a sequence chart illustrating a seventh exemplary embodiment of a method for reporting SL CSI.
FIG. 14 is a sequence chart illustrating an eighth exemplary embodiment of a method for reporting SL CSI.
FIG. 15 is a sequence chart illustrating a ninth exemplary embodiment of a method for reporting SL CSI.
FIG. 16 is a sequence chart illustrating a tenth exemplary embodiment of a method for reporting SL CSI.

### Description

While the present invention is susceptible to various modifications and alternative forms, specific embodiments are shown by way of example in the drawings and described in detail. It should be understood, however, that the description is not intended to limit the present invention to the specific embodiments, but, on the contrary, the present invention is to cover all modifications, equivalents, and alternatives that fall within the spirit and scope of the present invention.

Although the terms "first," "second," etc. may be used herein in reference to various elements, such elements should not be construed as limited by these terms. These terms are only used to distinguish one element from another. For example, a first element could be termed a second element, and a second element could be termed a first element, without departing from the scope of the present invention. The term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directed coupled" to another element, there are no intervening elements.

The terminology used herein is for the purpose of describing particular embodiments only and is not intended to be limiting of embodiments of the present invention. As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, parts, and/or combinations thereof, but do not preclude the presence or addition of one or more other features, integers, steps, operations, elements, parts, and/or combinations thereof.

Unless otherwise defined, all terms (including technical and scientific terms) used herein have the same meaning as commonly understood by those of ordinary skill in the art to which the present invention pertains. It will be further understood that terms defined in commonly used dictionaries should be interpreted as having a meaning that is consistent with their meaning in the context of the related art and will not be interpreted in an idealized or overly formal sense unless expressly so defined herein.

Hereinafter, preferred exemplary embodiments of the present invention will be described in detail with reference to the accompanying drawings. In describing the present invention, to facilitate the entire understanding, like numbers refer to like elements throughout the description of the figures and the repetitive description thereof will be omitted.

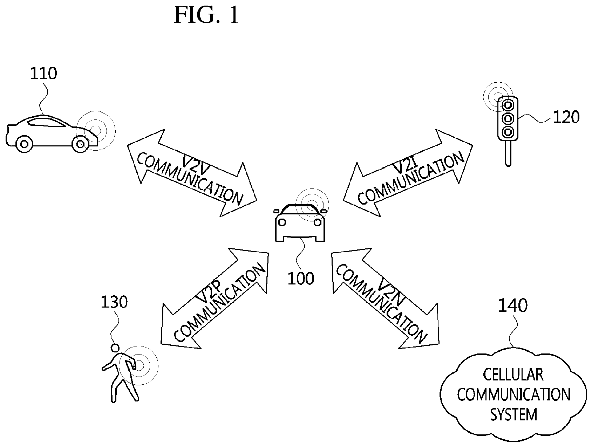

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g., a cellular communication system 140), and the V2X communications supported by the cellular communication system 140 may be referred to as "Cellular-V2X (C-V2X) communications." Here, the cellular communication system 140 may include the 4G communication system (e.g., LTE communication system or LTE-A communication system), the 5G communication system (e.g., NR communication system), and the like.

The V2V communications may include communications between a first vehicle 100 (e.g., a communication node located in the vehicle 100) and a second vehicle 110 (e.g., a communication node located in the vehicle 110). Various driving information such as velocity, heading, time, position, and the like may be exchanged between the vehicles 100 and 110 through the V2V communications. For example, autonomous driving (e.g., platooning) may be supported based on the driving information exchanged through the V2V communications. The V2V communications supported in the cellular communication system 140 may be performed based on "sidelink" communication technologies (e.g., ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g., the communication node located in the vehicle 100) and an infrastructure (e.g., road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g., ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g., the communication node located in the vehicle 100) and a person 130 (e.g., a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g., ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g., the communication node located in the vehicle 100) and a server connected through the cellular communication system 140. The V2N communications may be performed based on the 4G communication technology (e.g., LTE or LTE-A) or the 5G communication technology (e.g., NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

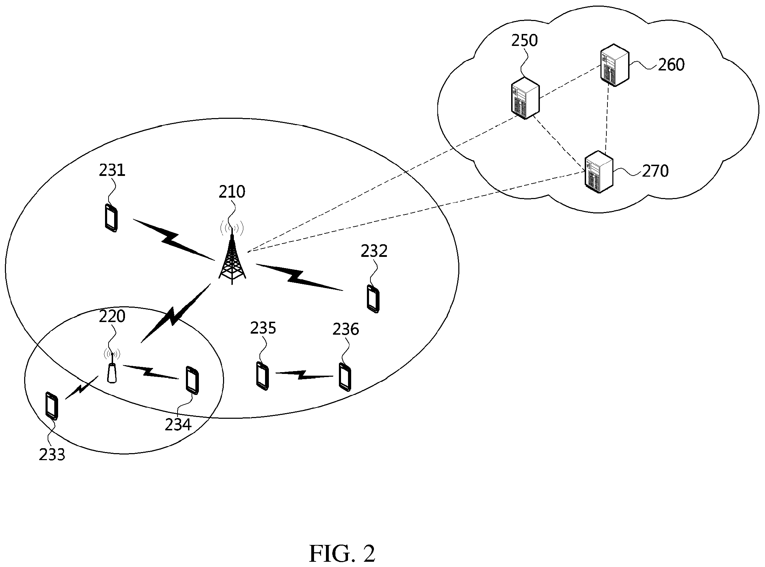

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g., a V2V network slice, a V2I network slice, a V2P network slice, a V2N network slice, etc.) may be configured, and the V2X communications may be supported through the V2X network slice configured in the core network.

The communication nodes (e.g., base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g., base station, relay, UE, S-GW, P-GW, MME, UPF, SMF, AMF, etc.) comprising the cellular communication system may be configured as follows.

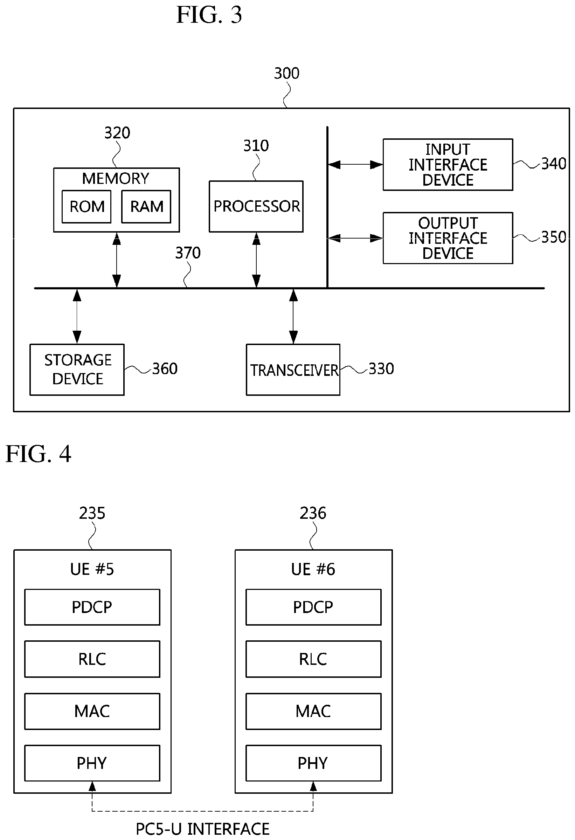

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a nonvolatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g., single user (SU)-MIMO, multi-user (MU)-MIMO, massive MIMO, etc.), coordinated multipoint (CoMP) communication technologies, carrier aggregation (CA) communication technologies, unlicensed band communication technologies (e.g., Licensed Assisted Access (LAA), enhanced LAA (eLAA), etc.), sidelink communication technologies (e.g., ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g., the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g., the UEs 235 and 236) performing sidelink communications may be configured as follows.

FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g., PC5-U interface). A layer-2 identifier (ID) (e.g., a source layer-2 ID, a destination layer-2 ID) may be used for the sidelink communications, and the layer 2-ID may be an ID configured for the V2X communications (e.g., V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g., the UEs 235 and 236) performing sidelink communications may be configured as follows.

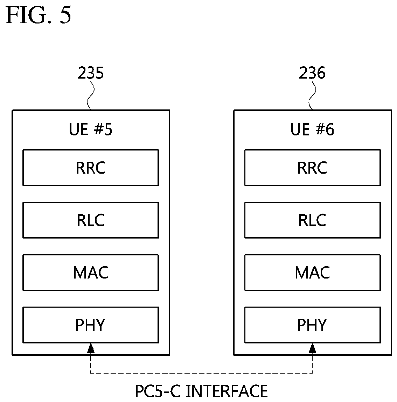

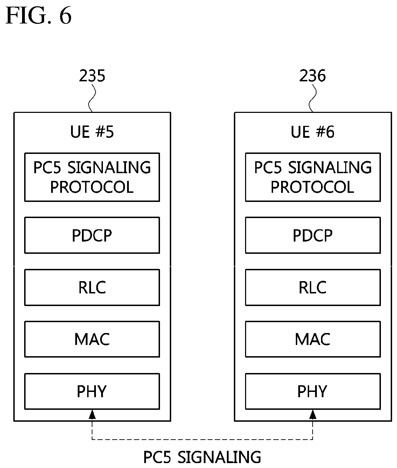

FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g., Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g., PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g., UE 235 or 236) by a higher layer signaling. The PSCCH may be used for transmitting and receiving sidelink control information (SCI) and may also be configured in the UE (e.g., UE 235 or 236) by a higher layer signaling.

The PSDCH may be used for a discovery procedure. For example, a discovery signal may be transmitted over the PSDCH. The PSBCH may be used for transmitting and receiving broadcast information (e.g., system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g., a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g., UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g., UE 235 or 236) within the resource pool configured by the dedicated RRC signaling procedure or the broadcast RRC signaling procedure.

Hereinafter, methods for retransmitting sidelink data will be described. In the exemplary embodiments, a HARQ response may be referred to as a HARQ-acknowledgement (ACK). The HARQ response may indicate ACK or negative ACK (NACK). Even when a method (e.g., transmission or reception of a signal) to be performed at a first communication node among communication nodes is described, a corresponding second communication node may perform a method (e.g., reception or transmission of the signal) corresponding to the method performed at the first communication node. That is, when an operation of a UE #1 (e.g., vehicle #1) is described, a UE #2 (e.g., vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g., sidelink data transmission, sidelink-shared channel (SL-SCH) transmission) may be performed based on one SCI (e.g., 1st-stage SCI). When the multi-SCI scheme is used, data transmission may be performed using two SCIs (e.g., 1st-stage SCI and 2nd-stage SCI). The SCI(s) may be transmitted on a PSCCH and/or a PSSCH. When the single-SCI scheme is used, the SCI (e.g., 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A first stage SCI format may include an SCI format 1-A, and a second stage SCI format may include an SCI format 2-A, an SCI format 2-B, and an SCI format 2-C.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements.

Meanwhile, channel state information (CSI) between terminals may be required for sidelink communication. That is, sidelink communication may be performed based on CSI. The CSI may include one or more of a channel quality indicator (CQI), rank indicator (RI), and precoding matrix indicator (PMI). In addition, the CSI may further include a reference signal received power (RSRP), reference signal received quality (RSRQ), and/or received signal strength indicator (RSSI). In exemplary embodiments below, a triggering method for SL CSI reporting, a triggering method for SL CSI measurement, a configuration method for SL CSI measurement, a configuration method for SL CSI reporting, and the like will be described. The SL CSI may mean CSI for sidelink communication. In exemplary embodiments below, CSI may mean SL CSI.

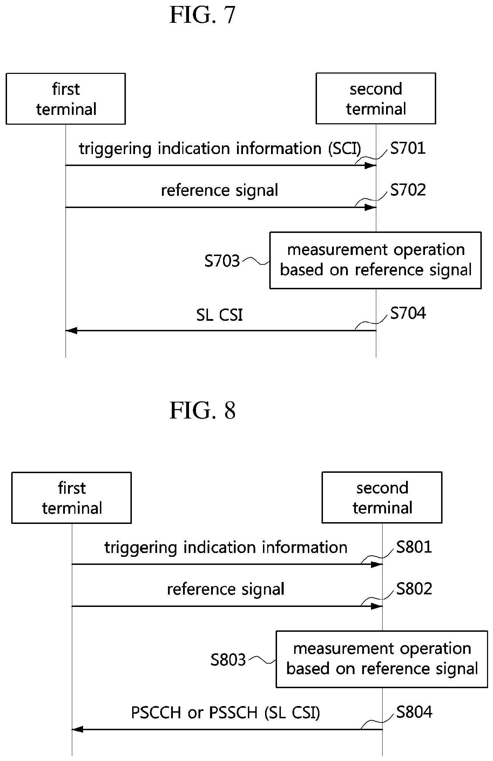

FIG. 7 is a sequence chart illustrating a first exemplary embodiment of a method for reporting SL CSI.

As shown in FIG. 7, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

The first terminal may generate an SCI including triggering indication information for SL CSI reporting. Triggering of SL CSI reporting may be indicated implicitly or explicitly. In exemplary embodiments, the 'triggering indication information for SL CSI reporting' may be referred to as 'triggering indication information'. The triggering indication information may indicate whether to trigger SL CSI reporting. The triggering indication information may be included in at least one of a first-stage SCI and/or second-stage SCI. For example, CSI request information included in the second-stage SCI may be used as the triggering indication information. The first terminal may transmit the SCI including the triggering indication information to the second terminal (S701). The second terminal may receive the SCI from the first terminal, and may identify the triggering indication information included in the SCI. The second terminal may determine that SL CSI reporting is triggered based on the triggering indication information.

The first terminal may transmit a reference signal (e.g., SL CSI-RS) (S702). The SL CSI-RS may be a CSI-RS for sidelink communication. The reference signal may be transmitted using a resource configured by a base station (e.g., base station to which the first terminal is connected). When SL CSI reporting is triggered, the second terminal may perform a measurement operation based on the reference signal received from the first terminal (S703). The second terminal may generate SL CSI based on a result of the measurement operation. The SL CSI may include one or more of a CQI, RI, and PMI. The SL CSI may be instantaneous channel state information and/or accumulated channel state information (e.g., statistical channel state information). The SL CSI may be channel state information for a wide band.

The second terminal may transmit the SL CSI to the first terminal (S704). The SL CSI may be transmitted on a sidelink channel (e.g., PSSCH, PSCCH, PSFCH). For example, a MAC control element (CE) including the SL CSI may be transmitted on a sidelink channel. When the MAC CE including the SL CSI is transmitted on a PSSCH, the SL CSI may be multiplexed with sidelink data in the PSSCH. The first terminal may receive the SL CSI from the second terminal, and may perform sidelink communication (e.g., unicast-based sidelink communication) based on the SL CSI.

### Method of configuring a reference signal for SL CSI measurement

The reference signal (e.g., CSI-RS, DMRS) for SL CSI measurement may be configured through one or a combination of two or more of system information, RRC signaling, MAC signaling (e.g., MAC CE), or PHY signaling (e.g., DCI, SCI). When the reference signal (e.g., a transmission resource and/or transmission pattern of the reference signal) is configured by system information, the SL CSI reporting method according to the exemplary embodiment shown in FIG. 7 may be performed without additional configuration (e.g., additional indication) for the reference signal. In addition to the CSI-RS, the SL CSI may be measured by other reference signals (e.g., DMRS). This operation may be supported according to configuration by RRC signaling, MAC signaling, and/or PHY signaling. The above-described configuration scheme may be a UE-specific scheme or a resource pool-specific scheme.

**[Table 3]**

| **Reference signal used for SL CSI measurement** | **RS type indicator** |
|---|---|
| DMRS | 01 |
| CSI-RS | 10 |
| DMRS and CSI-RS | 11 |
| none | 00 |

The RS type indicator defined in Table 3 may be used to indicate the type of the reference signal used for SL CSI measurement. The RS type indicator set to '01' may indicate that only DMRS is used for SL CSI measurement. The RS type indicator set to '10' may indicate that only CSI-RS is used for SL CSI measurement. The RS type indicator set to '11' may indicate that DMRS and CSI-RS are used for SL CSI measurement. Reference signals other than DMRS and CSI-RS (e.g., phase tracking (PT)-RS) may also be used for SL CSI measurement. The RS type indicators defined in Table 3 may be applied to exemplary embodiments shown in FIGS. 8 to 16.

The RS type indicator defined in Table 3 may be transmitted using one or more of RRC signaling, MAC signaling, and PHY signaling. The RS type indicator may be configured for each resource pool. In this case, the RS type indicator may be included in configuration information of a resource pool. The RS type indicator may be commonly applied to a plurality of terminals. Alternatively, the reference signal used for SL CSI measurement may be fixed.

The RS type indicator may be included in an SCI. For example, the first terminal (e.g., the first terminal of FIG. 7) may transmit an SCI including the RS type indicator to the second terminal (e.g., the second terminal of FIG. 7). The second terminal may receive the SCI from the first terminal, and identify the reference signal (e.g., DMRS and/or CSI-RS) used for SL CSI measurement based on the RS type indicator included in the SCI. The RS type indicator may implicitly indicate triggering of SL CSI reporting. When the RS type indicator is included in an SCI, the second terminal may determine that SL CSI reporting is triggered, may perform a measurement operation based on the reference signal indicated by the RS type indicator, and may transmit SL CSI including a result of the measurement operation to the first terminal.

The RS type indicator set to '00' may indicate cancellation of previous triggering for SL CSI reporting. Alternatively, the RS type indicator set to '00' may indicate that SL CSI reporting is not triggered. Alternatively, the RS type indicator set to '00' may indicate triggering of SL CSI reporting based on a previously configured reference signal rather than a currently configured reference signal. Alternatively, the RS type indicator set to '00' may indicate retransmission of an SL CSI report when the SL CSI report fails. In Table 3, the RS type indicator indicating 'none' (e.g., the RS type indicator set to '00') may be excluded from the configuration information.

When the RS type indicator is received, the second terminal may measure instantaneous channel state information based on the reference signal indicated by the RS type indicator. When the RS type indicator indicates 'none', the second terminal may not perform measurement and/or reporting of instantaneous channel state information. Alternatively, the second terminal may interpret 'none' based on the above-described schemes, and may operate according to a result of the interpretation.

The instantaneous channel state information may be reported together with average channel state information and/or filtered channel state information. Alternatively, average channel state information and/or filtered channel state information may be reported independently of the instantaneous channel state information. In this case, the RS type indicators defined in Table 3 may be applied. The instantaneous channel state information may be some of the above-described types of channel state information (e.g., CQI, RI, PMI). The channel state information may be classified into instantaneous channel state information and average channel state information. Alternatively, the channel state information may be classified into instantaneous channel state information and filtered channel state information. Alternatively, the channel state information may be classified into instantaneous channel state information, average channel state information, and filtered channel state information.

### Resource reservation method #1 for SL CSI reporting (resource reservation by the first terminal)

FIG. 8 is a sequence chart illustrating a second exemplary embodiment of a method for reporting SL CSI.

As shown in FIG. 8, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

A step S801 may be performed identically or similarly to the step S701 shown in FIG. 7. A step S802 may be performed identically or similarly to the step S702 shown in FIG. 7. A step S803 may be performed identically or similarly to the step S703 shown in FIG. 7. The second terminal may generate SL CSI based on a measurement result of a reference signal. The second terminal may transmit the SL CSI to the first terminal on a PSCCH and/or PSSCH (S804). When a PSCCH is used, the SL CSI may be multiplexed with other control information in the PSCCH. When a PSSCH is used, the SL CSI may be multiplexed with sidelink data in the PSSCH. The first terminal may receive the SL CSI from the second terminal by performing a monitoring operation on the PSCCH and/or PSSCH.

A MAC CE including the SL CSI may be transmitted on the PSCCH or PSSCH. Alternatively, the sidelink data multiplexed with the SL CSI may be transmitted on the PSSCH. The physical channel or signaling scheme may vary according to the type of the SL CSI (e.g., CQI, RI, PMI). The type of the SL CSI may vary according to each of the CQI, RI, and PMI. Alternatively, the type of the SL CSI may vary according to each of instantaneous channel state information, average channel state information, and filtered channel state information. For example, a first type of the SL CSI may be transmitted on a PSCCH, and a second type of the SL CSI may be transmitted on a PSSCH. The first terminal may receive the SL CSI from the second terminal, and may perform sidelink communication (e.g., unicast-based sidelink communication) with the second terminal based on the SL CSI.

Meanwhile, the first terminal may reserve a resource (e.g., physical resource) for SL CSI reporting based on a resource allocation scheme 1 or a resource allocation scheme 2. The resource allocation scheme 1 may be the sidelink TMs 1 and 3 defined in Table 2, and the resource allocation scheme 2 may be the sidelink TMs 2 and 4 defined in Table 2. Resource reservation information for SL CSI reporting (hereinafter referred to as 'CSI reporting resource information') may be used independently of triggering indication information. Alternatively, the CSI reporting resource information may be used together with the triggering indication information. The CSI reporting resource information may indicate time and frequency resources configured for transmission of the SL CSI. Exemplary embodiments according to methods of using the CSI reporting resource information and the triggering indication information may be as follows.

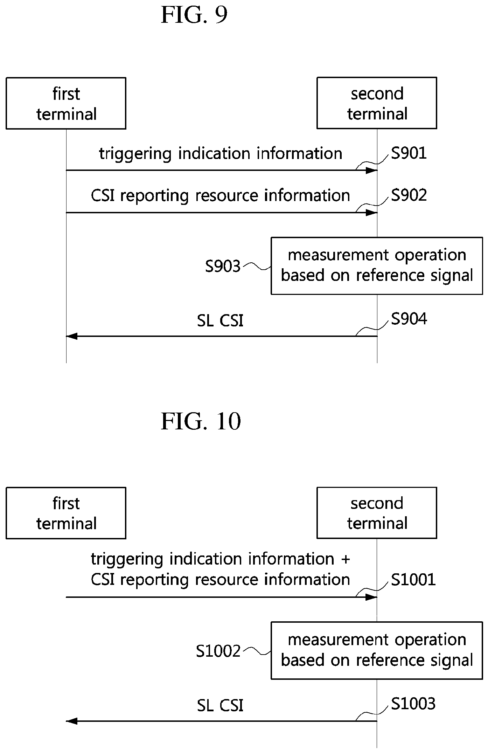

FIG. 9 is a sequence chart illustrating a third exemplary embodiment of a method for reporting SL CSI.

As shown in FIG. 9, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

The first terminal may transmit triggering indication information for SL CSI reporting to the second terminal (S901). After transmitting the triggering indication information, the first terminal may transmit CSI reporting resource information to the second terminal (S902). The second terminal may receive the triggering indication information from the first terminal, and then receive the CSI reporting resource information from the first terminal. Upon receiving the triggering indication information, the second terminal may perform a monitoring operation to receive the CSI reporting resource information. The triggering indication information may be sl-CSI-Acquisition included in an RRC message. In this case, the CSI reporting resource information may be frequency resource allocation information and time resource allocation information included in a first-stage SCI.

In another exemplary embodiment, the triggering indication information may be included in a first-stage SCI, and the CSI reporting resource information may be transmitted through a second-stage SCI or PSSCH. The first-stage SCI may indicate the triggering indication information implicitly or explicitly. Alternatively, when the single-SCI scheme is used, a first SCI may include triggering indication information, and a second SCI may include CSI reporting resource information. In another exemplary embodiment, when the single-SCI scheme is used, triggering indication information may be included in a single SCI, and CSI reporting resource information may be transmitted on a PSSCH scheduled by the single SCI. When the multi-SCI scheme is used, triggering indication information may be included in a second-stage SCI, and CSI reporting resource information may be transmitted on a PSSCH associated with the second-stage SCI.

When the triggering indication information is received before the CSI reporting resource information, the second terminal may determine whether the triggering indication information triggers SL CSI reporting. When the triggering indication information triggers SL CSI reporting, the second terminal may obtain the CSI reporting resource information by performing a monitoring operation on the PSCCH and/or PSSCH. The above-described operation may be performed by the terminal performing the SL CSI reporting procedure and/or another terminal performing a resource sensing procedure.

Upon receiving the CSI reporting resource information, the second terminal may perform a measurement operation based on a reference signal received from the first terminal (S903). The second terminal may transmit SL CSI resulting from the measurement operation to the first terminal (S904). The first terminal may receive the SL CSI from the second terminal, and may perform sidelink communication (e.g., unicast-based sidelink communication) with the second terminal based on the SL CSI. The step S904 may be performed identically or similarly to the step S704 shown in FIG. 7 or step S804 shown in FIG. 8.

FIG. 10 is a sequence chart illustrating a fourth exemplary embodiment of a method for reporting SL CSI.

As shown in FIG. 10, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

The first terminal may transmit triggering indication information and CSI reporting resource information to the second terminal (S1001). That is, the triggering indication information may be transmitted together with the CSI reporting resource information. The triggering indication information and CSI reporting resource information may be included in a first-stage SCI. In this case, bit(s) included in the first-stage SCI may explicitly or implicitly indicate each of the triggering indication information and the CSI reporting resource information. Alternatively, the triggering indication information and CSI reporting resource information may be transmitted through a second-stage SCI or PSSCH. When the single-SCI scheme is used, the triggering indication information and CSI reporting resource information may be included in one single SCI.

The second terminal may obtain the triggering indication information and CSI reporting resource information by performing a monitoring operation on the PSCCH or PSSCH. In addition, another terminal sensing resources for sidelink communication may obtain the triggering indication information and CSI reporting resource information from the PSCCH or PSSCH.

Upon receiving the triggering indication information and CSI reporting resource information, the second terminal may perform a measurement operation based on a reference signal received from the first terminal (S1002). The second terminal may transmit SL CSI resulting from the measurement operation to the first terminal (S1003). The first terminal may receive the SL CSI from the second terminal, and may perform sidelink communication (e.g., unicast-based sidelink communication) with the second terminal based on the SL CSI. The step S1003 may be performed identically or similarly to the step S704 shown in FIG. 7 or the step S804 shown in FIG. 8.

Meanwhile, the first-stage SCI may include resource information for transmission and reception of sidelink data (hereinafter referred to as 'data resource information') and the CSI reporting resource information. One field included in the first-stage SCI may be used to indicate the data resource information and the CSI reporting resource information. Alternatively, some bits of one field included in the first-stage SCI may be used to indicate the data resource information and the CSI reporting resource information. In this case, a discrimination indicator for distinguishing between the data resource information and the CSI reporting resource information may be required. The discrimination indicator may be defined explicitly or implicitly in the first-stage SCI. A specific field included in the first-stage SCI may be reused for the discrimination indicator.

The triggering indication information and CSI reporting resource information may be included in a second-stage SCI. In this case, the second terminal (e.g., the terminal reporting SL CSI) may obtain the triggering indication information and CSI reporting resource information by decoding the second-stage SCI. In addition, another terminal sensing resources for sidelink transmission may obtain the triggering indication information and CSI reporting resource information by decoding the second-stage SCI.

The triggering indication information and CSI reporting resource information may be transmitted on a PSSCH. In this case, the terminal may decode the first-stage SCI and the second-stage SCI, and may obtain the triggering indication information and CSI reporting resource information from a PSSCH associated with the corresponding SCI. Here, the terminal may be the terminal reporting SL CSI or the terminal sensing resources for sidelink transmission.

The data resource information may be included in the first-stage SCI, and the CSI reporting resource information may be transmitted through the second-stage SCI or PSSCH. In this case, resource information included in the second-stage SCI may be recognized as the CSI reporting resource information.

The data resource information and CSI reporting resource information may be included in the second-stage SCI. One field included in the second-stage SCI may be used to indicate the data resource information and CSI reporting resource information. Alternatively, some bits of one field included in the second-stage SCI may be used to indicate the data resource information and CSI reporting resource information. In this case, a discrimination indicator for distinguishing between the data resource information and the CSI reporting resource information may be required. The discrimination indicator may be defined explicitly or implicitly in the second-stage SCI. A specific field included in the second-stage SCI may be reused for the discrimination indicator.

When the data resource information is distinguished from the CSI reporting resource information within the same SCI, the triggering indication information may not be transmitted. When a field indicating the data resource information is different from a field indicating the CSI reporting resource information, "the field indicating the CSI reporting resource information is included in the SCI" may mean that SL CSI reporting is triggered. When one field included in the SCI is used to indicate the data resource information and CSI reporting resource information, an additional indicator included in the corresponding SCI may be used as the triggering indication information. Alternatively, when some bits of one field included in the SCI are used to indicate the data resource information and CSI reporting resource information, an additional indicator included in the corresponding SCI may be used as the triggering indication information.

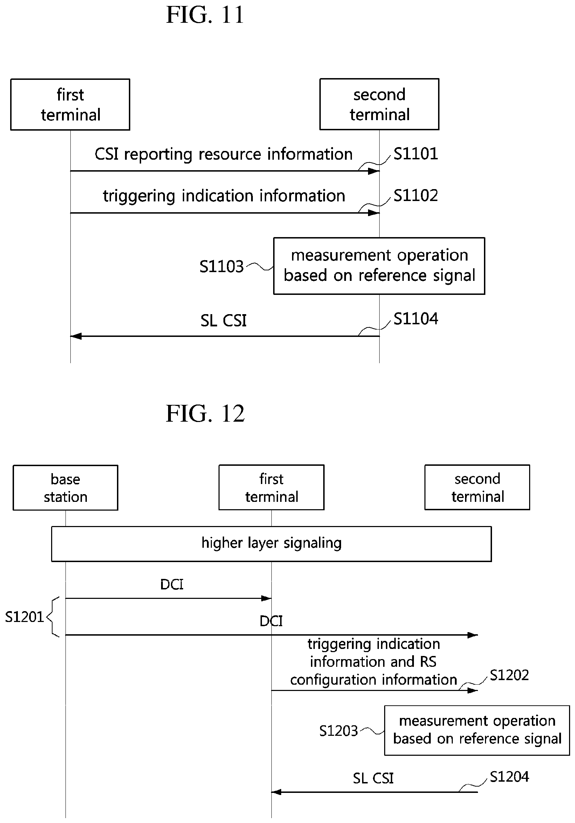

FIG. 11 is a sequence chart illustrating a fifth exemplary embodiment of a method for reporting SL CSI.

As shown in FIG. 11, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

The first terminal may transmit CSI reporting resource information (S1101). After transmitting the CSI reporting resource information, the first terminal may transmit triggering indication information (S1102). For example, the CSI reporting resource information may be included in a first-stage SCI, and a second-stage SCI associated with the first-stage SCI may include the triggering indication information. CSI request information included in the second-stage SCI may be the triggering indication information. When the triggering indication information indicates that SL CSI reporting is triggered, resource allocation information (e.g., frequency resource allocation information and time resource allocation information) included in the first-stage SCI associated with the second-stage SCI may be interpreted as the CSI reporting resource information. A resource indicated by the CSI reporting resource information may belong to a resource pool configured by a base station. Alternatively, the first terminal may autonomously select a CSI reporting resource.

That is, the second terminal may identify the resource allocation information included in the first-stage SCI received from the first terminal, and identify the triggering indication information (i.e., CSI request information) included in the second-stage SCI associated with the first-stage SCI. When the triggering indication information indicates that SL CSI reporting is triggered, the second terminal may determine that the resource allocation information included in the first-stage SCI is used for SL CSI reporting. On the other hand, when the triggering indication information indicates that SL CSI reporting is not triggered, the second terminal may determine that the resource allocation information included in the first-stage SCI is data resource information. Here, the second terminal may identify the use of the resource allocation information included in the first-stage SCI based on the triggering indication information included in the second-stage SCI. Another terminal sensing resources for sidelink transmission may not know the use of the resource allocation information included in the first-stage SCI because it decodes only the first-stage SCI.

The triggering indication information included in the second-stage SCI may be used to distinguish the data resource information from the CSI reporting resource information. When a discrimination indicator for distinguishing the data resource information and the CSI reporting resource information is included in the first-stage SCI, the second-stage SCI may not include the triggering indication information.

Upon receiving the CSI reporting resource information and triggering indication information, the second terminal may perform a measurement operation based on a reference signal received from the first terminal (S1103). The measurement operation may be performed when the triggering indication information indicates that SL CSI reporting is triggered. The second terminal may transmit SL CSI resulting from the measurement operation to the first terminal (S1104). The SL CSI may be transmitted on a PSSCH scheduled by the first-stage SCI. In this case, the SL CSI may be multiplexed with sidelink data in the PSSCH. The SL CSI may be transmitted through a MAC CE including CQI and RI. The first terminal may receive the SL CSI from the second terminal, and may perform sidelink communication (e.g., unicast-based sidelink communication) with the second terminal based on the SL CSI. The step S1104 may be performed identically or similarly to the step S704 shown in FIG. 7 or the step S804 shown in FIG. 8.

In another exemplary embodiment, the CSI reporting resource information in the step S1101 may be transmitted through RRC signaling. The CSI reporting resource information may indicate a latency bound value for SL CSI reporting. The latency bound value may be set in units of slots. The latency bound value may be sl-LatencyBound-CSI-Report. In the step S1102, the triggering indication information (e.g., CSI request information) may be transmitted through the second-stage SCI. When the triggering indication information indicates that SL CSI reporting is triggered, the second terminal may perform a measurement operation based on a reference signal received from the first terminal (S1103). The second terminal may transmit SL CSI resulting from the measurement operation to the first terminal (S1104). The SL CSI may be transmitted within a period corresponding to the latency bound value from a reception time of the second-stage SCI. If it is impossible to transmit the SL CSI within the period corresponding to the latency bound value from the reception time of the second-stage SCI, the SL CSI may be discarded.

The first terminal may perform a monitoring operation to receive the SL CSI from the second terminal. The monitoring operation may be performed within a period corresponding to the latency bound value from a transmission time of the second-stage SCI. When the SL CSI is received from the second terminal, the first terminal may perform sidelink communication (e.g., unicast-based sidelink communication) based on the SL CSI. The step S1104 may be performed identically or similarly to the step S704 shown in FIG. 7 or the step S804 shown in FIG. 8.

### Resource reservation method #2 for SL CSI reporing (resource reservation by the base station)

When the resource allocation mode 1 is used, the base station may configure (e.g., reserve) a resource for SL CSI reporting. The base station may transmit all or part of the resource for SL CSI reporting to each of the first terminal (e.g., transmitting terminal) and the second terminal (e.g., receiving terminal). The base station may transmit one DCI (e.g., common DCI) including CSI reporting resource information to the first terminal and the second terminal. Alternatively, the base station may inform each of the first terminal and the second terminal of the CSI reporting resource information using an independent DCI.

FIG. 12 is a sequence chart illustrating a sixth exemplary embodiment of a method for reporting SL CSI.

As shown in FIG. 12, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

Parameters (e.g., information indicating whether to activate SL CSI reporting (e.g., sl-*CSI-Acquisition*), a type of a reference signal, a transmission resource of the reference signal, a transmission time of SL CSI (e.g., *sl*-*LatencyBound-CSI-Report*)*,* etc.) for sidelink communication may be configured by a higher layer signaling operation between the base station and the terminal (e.g., the first terminal and/or the second terminal). The transmission time of SL CSI may indicate a time offset between a reception time of a second-stage SCI including triggering indication information and a transmission time of the SL CSI triggered by the second-stage SCI.

The base station may transmit a DCI to the first terminal and the second terminal (S1201). The DCI may include one or more of RS configuration information, resource allocation information (e.g., CSI reporting resource information), and triggering indication information. The DCI may have a DCI format 3_0 or DCI format 3_1. In the step S1201, one DCI (e.g., the same DCI) may be simultaneously transmitted to the first terminal and the second terminal. Alternatively, in the step S1201, a DCI #1 may be transmitted to the first terminal, and a DCI #2 may be transmitted to the second terminal. In this case, information included in the DCI #1 may be the same as or different from information included in the DCI #2. For example, the DCI #1 may include the RS configuration information and/or triggering indication information, and the DCI #2 may include the CSI reporting resource information. The RS configuration information may include transmission resource information and/or transmission pattern information of a reference signal. The CSI reporting resource information for the second terminal may replace the triggering indication information.

When the same DCI is transmitted in the step S1201, a CSI reporting resource for the second terminal may be configured using a time offset and/or a frequency offset based on a sidelink resource allocated to the first terminal.

The first terminal and the second terminal may receive the DCI(s) from the base station and may identify the information included in the DCI(s). The first terminal may transmit the triggering indication information and/or RS configuration information to the second terminal (S1202). For example, the first terminal may transmit a second-stage SCI including the triggering indication information (e.g., CSI request information) to the second terminal. The second terminal may determine that SL CSI reporting is triggered by receiving the triggering indication information from the first terminal. The second terminal may perform a measurement operation based on a reference signal received from the first terminal (S1203). The reference signal may be transmitted/received based on the RS configuration information.

The second terminal may transmit SL CSI resulting from the measurement operation to the first terminal (S1204). The SL CSI may be transmitted through an SL resource allocated by the base station (e.g., a resource indicated by resource allocation information included in DCI). When the triggering indication information indicates that SL CSI reporting is triggered, the SL resource allocated by the base station may be used for transmission of the SL CSI. In this case, the SL CSI may be multiplexed with SL data in the SL resource.

The first terminal may receive the SL CSI from the second terminal, and may perform sidelink communication (e.g., unicast-based sidelink communication) based on the SL CSI. The SL CSI may be received in the SL resource allocated by the base station (e.g., resource indicated by the resource allocation information included in the DCI). The step S1204 may be performed identically or similarly to the step S704 shown in FIG. 7 or the step S804 shown in FIG. 8.

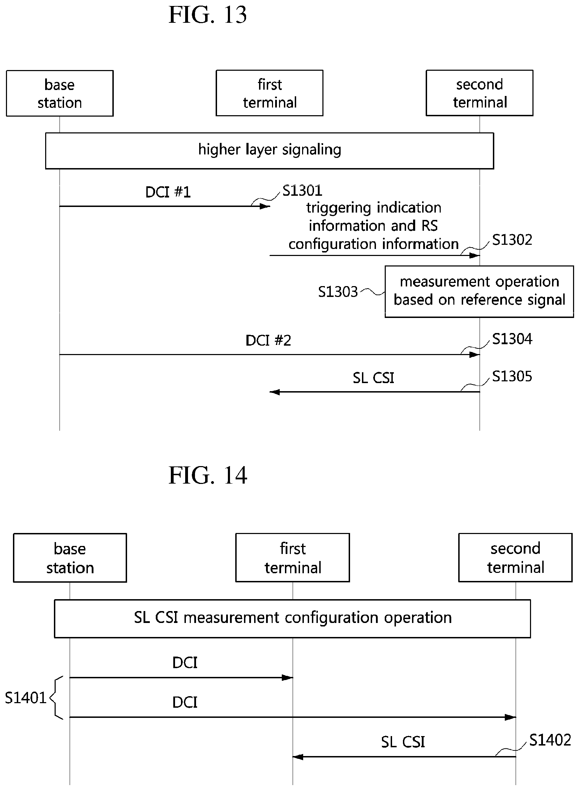

FIG. 13 is a sequence chart illustrating a seventh exemplary embodiment of a method for reporting SL CSI.

As shown in FIG. 13, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

Parameters (e.g., information indicating whether to activate SL CSI reporting (e.g., *sl-CSI-Acquisition*), a type of a reference signal, a transmission resource of the reference signal, a transmission time of SL CSI (e.g., *sl-LatencyBound-CSI-Report*)*,* etc.) for sidelink communication may be configured by a higher layer signaling operation between the base station and the terminal (e.g., the first terminal and/or the second terminal). The transmission time of SL CSI may indicate a time offset between a reception time of a second-stage SCI including triggering indication information and a transmission time of the SL CSI triggered by the second-stage SCI.

The base station may transmit a DCI #1 including sidelink resource allocation information to the first terminal (S1301). The sidelink resource allocation information of the DCI #1 may include one or more of RS configuration information, resource allocation information (e.g., CSI reporting resource information), and triggering indication information. The DCI may have a DCI format 3_0 or DCI format 3_1. The first terminal may receive the DCI #1 from the base station and may identify the information included in DCI #1. The first terminal may transmit the triggering indication information and/or RS configuration information to the second terminal (S1302). For example, the first terminal may transmit a second-stage SCI including the triggering indication information (e.g., CSI request information) to the second terminal. The triggering indication information may be explicitly or implicitly indicated. The RS configuration information may include transmission resource information and/or transmission pattern information of the reference signal. The second terminal may determine that SL CSI reporting is triggered by receiving the triggering indication information from the first terminal. The second terminal may perform a measurement operation based on the reference signal received from the first terminal (S1303). The reference signal may be transmitted/received based on the RS configuration information.

"The SL CSI reporting is performed until a specific time point after the triggering indication information is received (or transmitted)" may be configured. The specific time point may be configured by the base station. The specific time point may be sl-LatencyBound-CSI-Report configured by RRC signaling. In this case, the base station may transmit a DCI #2 including resource allocation information (e.g., CSI reporting resource information) to the second terminal before a specific time point (S1304). The DCI #2 may be transmitted independently of the DCI #1. If there is no restriction on a SL CSI reporting time, the DCI #2 including the resource allocation information (e.g., CSI reporting resource information) may be transmitted within a specific time offset based on a time at which the first terminal transmits the triggering indication information or a time at which the base station transmits the DCI #1. Alternatively, the DCI #2 may be transmitted regardless of a specific time point.

The second terminal may receive the DCI #2 from the base station and may identify the resource allocation information (e.g., CSI reporting resource information) included in the DCI #2. The second terminal may transmit SL CSI to the first terminal using a resource indicated by the resource allocation information (e.g., CSI reporting resource information) (S1305). The SL CSI may be multiplexed with SL data in the resource indicated by the resource allocation information. The first terminal may receive the SL CSI from the second terminal, and may perform sidelink communication (e.g., unicast-based sidelink communication) with the second terminal based on the SL CSI.

FIG. 14 is a sequence chart illustrating an eighth exemplary embodiment of a method for reporting SL CSI.

As shown in FIG. 14, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

SL CSI measurement configuration may be completed, and the second terminal may perform a measurement operation based on a reference signal received from the first terminal. The measurement operation may be continuously performed. The base station may transmit a DCI including sidelink resource allocation information to the first terminal and the second terminal (S1401). The sidelink resource allocation information may include CSI reporting resource information. When the CSI reporting resource information is received, the first terminal and/or the second terminal may determine that SL CSI reporting is triggered. In this case, the second terminal may transmit SL CSI to the first terminal using a resource indicated by the CSI reporting resource information (S1402). The first terminal may receive the SL CSI from the second terminal, and may perform sidelink communication (e.g., unicast-based sidelink communication) with the second terminal based on the SL CSI.

### PSFCH-based channel state information reporting method

SL CSI may be transmitted on a PSFCH. This operation may be performed as follows.

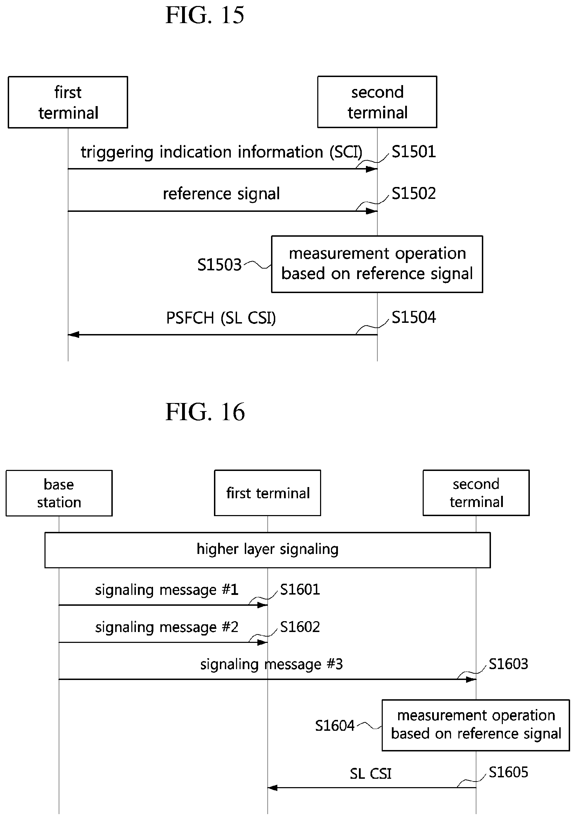

FIG. 15 is a sequence chart illustrating a ninth exemplary embodiment of a method for reporting SL CSI.

As shown in FIG. 15, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

A step S1501 may be performed identically or similarly to the step S701 shown in FIG. 7. A step S1502 may be performed identically or similarly to the step S702 shown in FIG. 7. A step S1503 may be performed identically or similarly to the step S703 shown in FIG. 7. The second terminal may generate SL CSI based on a measurement result of a reference signal. The second terminal may transmit the SL CSI to the first terminal on a PSFCH (S1504). The SL CSI may be multiplexed with a HARQ feedback in the PSFCH. The first terminal may receive the SL CSI from the second terminal by performing a monitoring operation on the PSFCH. The first terminal may perform sidelink communication with the second terminal based on the SL CSI.

When triggering indication information is transmitted through an SCI, a PSCCH and/or PSSCH may be transmitted. When a HARQ feedback is enabled in sidelink communication based on the unicast scheme or groupcast scheme, a PSFCH may be transmitted at a specific time point after reception of the PSCCH and/or PSSCH including the triggering indication information. In this case, the PSFCH may include the SL CSI as well as a HARQ feedback. A MAC CE including the SL CSI may be transmitted on the PSFCH. This operation may be performed when the measurement operation is completed before a transmission time of the HARQ feedback.

For configuration of a reference signal in the exemplary embodiment shown in FIG. 15, the scheme defined in Table 3 may be used. When a PSFCH resource is periodically configured, the MAC CE including the SL CSI may be transmitted on the earliest PSFCH when the measurement operation is completed. In another exemplary embodiment, the PSFCH may be configured to be transmitted every time after a plurality of sidelink channels (e.g., PSCCH and PSSCH). In this case, the MAC CE including the SL CSI may be transmitted on the earliest PSFCH when the measurement operation is completed.

In another exemplary embodiment, the MAC CE including the SL CSI may be configured to be transmitted through a PSFCH associated with the sidelink channel including the triggering indication information. If it is difficult to report the SL CSI in a current PSFCH, the SL CSI may be reported on the next PSFCH. If it is impossible to report the SL CSI within a preconfigured time, the reporting of the SL CSI may be canceled. In this case, the first terminal (e.g., transmitting terminal) may trigger a report of the SL CSI again.

In the communication system, configuration of HARQ feedback and configuration of blind retransmission may be changeable. In this case, for SL CSI reporting using a PSFCH, the first terminal (e.g., transmitting terminal) and/or the base station may configure a HARQ feedback-based blind retransmission scheme, and then the HARQ feedback-based blind retransmission scheme may be applied.

### Triggering of SL CSI reporting and configuration of a CSI reporting resource by a base station

FIG. 16 is a sequence chart illustrating a tenth exemplary embodiment of a method for reporting SL CSI.

As shown in FIG. 16, a communication system may include a first terminal and a second terminal. Sidelink communication may be performed between the first terminal and the second terminal. The first terminal may be the UE 235 shown in FIG. 2, and the second terminal may be the UE 236 shown in FIG. 2. Each of the first terminal and the second terminal may be configured identically or similarly to the communication node 300 shown in FIG. 3. Each of the first terminal and the second terminal may support the protocol stacks shown in FIGS. 4 to 6. Each of the first terminal and the second terminal may support the sidelink TMs defined in Table 2. The first terminal transmitting a reference signal (e.g., CSI-RS, DMRS) may be referred to as a transmitting (Tx) terminal, and the second terminal receiving the reference signal may be referred to as a receiving (Rx) terminal.

A signaling message may be one or more of system information, RRC signaling message, MAC signaling message, or PHY signaling message. For example, a signaling message #1 may be transmitted on a PUCCH and/or PUSCH, and signaling messages #2 and #3 may be transmitted on PDCCH(s) and/or PDSCH(s).

The first terminal may transmit the signaling message #1 indicating that SL CSI of a specific terminal (e.g., the second terminal) is required to the base station (S1601). The signaling message #1 may include an identifier of the second terminal. The base station may receive the signaling message #1 from the first terminal, and may determine that the SL CSI of the second terminal is required based on the information (e.g., the identifier of the second terminal) included in the signaling message #1. In this case, the base station may transmit the signaling message #2 including information for channel state measurement and/or CSI reporting resource information to the first terminal (S1602). The information for channel state measurement may include RS configuration information, and the CSI reporting resource information may indicate a physical resource for SL CSI reporting. The signaling message #2 may include information other than the above-described information. The first terminal may receive the signaling message #2 from the base station and may identify the information included in the signaling message #2.

Also, the base station may transmit the signaling message #3 including information for channel state measurement and/or CSI reporting resource information to the second terminal (S1603). The information for channel state measurement may include RS configuration information, and the CSI reporting resource information may indicate a physical resource for SL CSI reporting. The signaling message #3 may include information other than the above-described information. The second terminal may receive the signaling message #3 from the base station and may identify the information included in the signaling message #3.

The first terminal may transmit a reference signal. The reference signal may be transmitted based on the RS configuration information received from the base station. The second terminal may perform a measurement operation based on the reference signal received from the first terminal (S1604). The measurement operation may be performed even before reception of the above-described signaling message. That is, the second terminal may perform the measurement operation at any time. The second terminal may transmit a result of the measurement operation (e.g., SL CSI) to the first terminal using a resource indicated by the CSI reporting resource information received from the base station (S1605). The SL CSI may be transmitted through one or more of an RRC signaling message, MAC signaling message (e.g., MAC CE), and PHY signaling message. For example, the SL CSI may be transmitted on a PSSCH, PSCCH, and/or PSFCH.

The first terminal may acquire the SL CSI of the second terminal by performing monitoring on the resource indicated by the CSI reporting resource information received from the base station. The first terminal may perform sidelink communication with the second terminal using the SL CSI.

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. An operation method of a first terminal in a communication system, the operation method comprising:
transmitting sidelink control information (SCI) including channel state information (CSI) request information to a second terminal;
transmitting a reference signal for sidelink (SL) communication between the first terminal and the second terminal to the second terminal; and
when the CSI request information indicates a CSI report request, receiving a message including SL CSI from the second terminal in a SL resource allocated by the base station,
wherein the SL CSI is generated based on the reference signal.

2. The operation method according to claim 1, wherein the SL CSI is multiplexed with SL data in the SL resource.

3. The operation method according to claim 1, wherein when the CSI request information does not indicate the CSI report request, the SL resource is used for transmitting and receiving SL data between the first terminal and the second terminal instead of the SL CSI.

4. The operation method according to claim 1, wherein the reference signal is a CSI-reference signal (CSI-RS) or a demodulation reference signal (DMRS), and a higher layer message including information indicating a type of the reference signal is received from the base station.

5. The operation method according to claim 1, wherein a resource for transmitting the reference signal is configured by the base station.

6. The operation method according to claim 1, wherein the SL CSI is received within a preconfigured period from a transmission time of the SCI, and a higher layer message including information indicating the preconfigured period is received from the base station.

7. The operation method according to claim 1, wherein the SL CSI includes a channel quality indicator (CQI) and a rank indicator (RI), and the message is a medium access control (MAC) control element (CE) including the CQI and the RI.

8. An operation method of a second terminal in a communication system, the operation method comprising:
receiving downlink control information (DCI) including resource allocation information from a base station;
receiving sidelink control information (SCI) including channel state information (CSI) request information from a first terminal; and
when the CSI request information indicates a CSI report request, transmitting a message including sidelink (SL) CSI in a SL resource indicated by the resource allocation information to the first terminal.

9. The operation method according to claim 8, wherein the SL CSI is multiplexed with SL data in the SL resource.

10. The operation method according to claim 8, further comprising, when the CSI request information does not indicate the CSI report request, transmitting SL data to the first terminal in the SL resource.

11. The operation method according to claim 8, wherein the SL CSI is measured based on a reference signal received from the first terminal.

12. The operation method according to claim 11, wherein the reference signal is a CSI-reference signal (CSI-RS) or a demodulation reference signal (DMRS), and a higher layer message including information indicating a type of the reference signal is received from the base station.

13. The operation method according to claim 11, wherein a resource for receiving the reference signal is configured by the base station.

14. The operation method according to claim 8, wherein the message including the SL CSI is transmitted within a preconfigured period from a reception time of the SCI, and a higher layer message including information indicating the preconfigured period is received from the base station.

15. The operation method according to claim 8, wherein the SL CSI includes a channel quality indicator (CQI) and a rank indicator (RI), and the message is a medium access control (MAC) control element (CE) including the CQI and the RI.

16. A second terminal in a communication system, comprising:
a processor; and
a memory storing one or more instructions executable by the processor,
wherein the one or more instructions cause the second terminal to:
receive downlink control information (DCI) including resource allocation information from a base station;
receive sidelink control information (SCI) including channel state information (CSI) request information from a first terminal; and
when the CSI request information indicates a CSI report request, transmit a message including sidelink (SL) CSI in a SL resource indicated by the resource allocation information to the first terminal.

17. The second terminal according to claim 16, wherein the SL CSI is multiplexed with SL data in the SL resource.

18. The second terminal according to claim 16, wherein the SL CSI is measured based on a reference signal received from the first terminal, the reference signal is a CSI-reference signal (CSI-RS) or a demodulation reference signal (DMRS), and a higher layer message including information indicating a type of the reference signal is received from the base station.

19. The second terminal according to claim 16, wherein the message including the SL CSI is transmitted within a preconfigured period from a reception time of the SCI, and a higher layer message including information indicating the preconfigured period is received from the base station.

20. The second terminal according to claim 16, wherein the SL CSI includes a channel quality indicator (CQI) and a rank indicator (RI), and the message is a medium access control (MAC) control element (CE) including the CQI and the RI.
